# EUROPEAN PATENT SPECIFICATION

(11) **EP 2 014 955 B1**
(45) Date of publication and mention of the grant of the patent: **05.12.2012**
(21) Application number: 07740671.8
(22) Date of filing: 30.03.2007
(51) Int. Cl.: F16H 57/04, B01D 35/027

(54) **OIL STRAINER OF TRANSMISSION**
ÖLSIEB FÜR GETRIEBE
CREPINE DE TRANSMISSION

(30) Priority: 01.05.2006 JP 2006127584
(43) Date of publication of application: 14.01.2009
(73) Proprietor: HONDA MOTOR CO., LTD., Tokyo 107-8556 (JP)
(72) Inventor: SHINBORI, Isamu c/o HONDA R&D CO., LTD., Wako-shi, Saitama 351-0193 (JP); TAKEI, Susumu c/o HONDA R&D CO., LTD., Wako-shi, Saitama 351-0193 (JP); TSUBATA, Yoshimichi c/o HONDA R&D CO., LTD., Wako-shi, Saitama 351-0193 (JP)
(74) Representative: Rupp, Christian
(86) International application number: PCT/JP2007/057235
(87) International publication number: WO 2007/129514

(56) References cited:
- JP-A- 8 004 886
- JP-A- 08 004 886
- JP-A- 2001 028 145
- JP-A- 2001 124 188
- JP-A- 2002 273 116
- JP-A- 2005 069 395
- JP-A- 2005 291 408
- JP-A- 2005 291 408
- JP-U- 03 053 667
- JP-U- 58 081 305
- JP-U- 58 181 305

## Description

### Technical Field

The present invention relates to an oil strainer for filtering an oil in a transmission case.

### Background Art

An oil used as a working fluid or a lubricating oil in a transmission is reserved in a lower part of a transmission casing, is sucked by an oil pump and is supplied to a control valve and other parts to be lubricated. In this case, it is a common practice to disposed an oil strainer in the lower part of the transmission casing and to filter the oil through the strainer before the oil is sucked by the pump.

A configuration in which a filter member formed from a non-woven fabric or the like is disposed in a resin-made case to form the oil strainer has been known. In this case, the filter member composed of the non-woven fabric is clamped between an upper-lower pair of cases configured dividedly, and the upper and lower cases are joined to each other, to fabricate the strainer.

Japanese Patent Laid-open No. 2001-124188 discloses an oil strainer wherein upper and lower cases can be vibration welded efficiently and, in use of the oil strainer, bubbles are prevented from stagnating at the lower surface of a lower flange.

In the oil strainer disclosed in the patent document, at the time of joining the upper case and the lower case of the oil strainer by vibration welding, a notch is provided in a rib formed along the whole flange circumference of the joint part for holding a jig for vibration welding, and air tending to stagnate at the lower part of the flange is discharged through the notch, thereby preventing aeration from occurring.

In addition, Japanese Patent Laid-open No. 2005-291408 discloses an oil strainer wherein a filter member of an oil strainer and a flange part of a case thereof are disposed in the state of being inclined to the left or the right as viewed in the forward vehicle running direction, so as to lessen the portion where air tends to stagnate, thereby restraining the generation of aeration.
Patent Document 1: Japanese Patent Laid-open No. 2001-124188
Patent Document 2: Japanese Patent Laid-open No. 2005-291408

JP 2002-273116 discloses an oil strainer for a transmission, comprising a resin-made upper case which is provided with a communication port for communication to a pump in a side surface of an upper part thereof and which has an upper flange at an outer periphery thereof, a resin-made lower case which is provided with an oil suction port in a lower surface thereof and which has a lower flange joined to said upper flange of said upper case, and a filter member which is disposed in a space formed by joining said upper and lower cases and which filters an oil flowing from said oil suction port to said communication port.

JP 58-81305U discloses a case in which an oil strainer is disposed wherein an end position of an oil suction port conducting oil by an oil suction port cover member and the total amount of oil in the case are so determined that the end position of said suction port is located substantially at the intersection between an oil surface inclined in the opposite direction.

### Disclosure of Invention

### Problems to be Solved by the Invention

In the oil strainer disclosed in Japanese Patent Laid-open No. 2001-124188, complete removal of the rib formed along the whole circumference of the flange constituting the joint part between the upper case and the lower case is difficult in view of vibration welding of the cases, so that the site for forming the notch is restricted. Therefore, there remains the problem of, for example, stagnation of air at the four corners of the oil strainer, and fine aeration possibly caused by the stagnating air.

If the oil strainer is mounted in the state of being inclined to the front or rear side as viewed in the forward vehicle running direction in order to prevent the generation of the microscopic aeration, the area of the passage in the vicinity of the oil suction port would be varied between the time of forward running and the time of rearward running of the vehicle. Therefore, it is difficult to secure an aeration balance in each cases of forward running and rearward running.

In addition, in view of the structure in which a main oil passage to the oil suction port of the strainer is along the forward vehicle running direction, the system in which the strainer is inclined along the front-rear direction leaves some air stagnation area in the oil passage, again causing the fine aeration.

In the oil strainer described in Japanese Patent Laid-open No. 2005-291408, in consideration of the time of a change in the oil surface such as the time of sudden vehicle start, both ends in the vehicle running direction of the oil suction port formed in the lower case of the oil strainer constitute dominant factors in setting the oil surface in the transmission. Accordingly, aeration balance is kept by making appropriate the position and dimensions of the oil suction port.

The total amount of the oil in the transmission is substantially determined by the position and dimensions of the oil suction port which are so set as to keep the aeration balance. Therefore, when the total amount of the oil in the transmission is large, the weight thereof is also large accordingly, and there is a fear of generation of aeration due to an increase in oil agitation resistance of gears or a fear of worsening of fuel economy attendant on an increase in friction.

If the spacing in the vehicle running direction of the oil suction port formed in the lower case of the oil strainer is narrowed as a countermeasure against the problem mentioned just above, the resistance at the time of sucking the oil would be increased, so that the hydraulic oil in a hydraulic pressure control circuit may be lowered, or the increase in the oil suction resistance may cause an increase in the oil pump driving torque, leading to worsening of fuel economy.

Besides, if the oil suction port is enlarged, aeration toughness at the time of a change in the oil surface would be lowered, so that the total amount of the oil in the transmission must be increased further; thus, a vicious circle is likely to arise.

Accordingly, it is an object of the present invention to provide an oil strainer for a transmission which is simple in structure and with which it is possible to reduce the total amount of oil and to restrain aeration from being generated.

### Means for Solving the Problems

According to the present invention, there is provided an oil strainer for a transmission, including a resin-made upper case which is provided with a communication port for communication to a pump in a side surface of an upper part thereof and which has an upper flange at an outer periphery thereof, a resin-made lower case which is provided with an oil suction port in a lower surface thereof and which has a lower flange joined to the upper flange of the upper case, and a filter member which is disposed in a space formed by joining the upper and lower cases and which filters an oil flowing from the oil suction port to the communication port, the oil strainer further including an oil suction port cover member which is so formed as to cover at least an inside upper surface of the oil suction port and which forms a passage for conducting the oil to the filter member.

According to this configuration, the end position of the oil suction port in the oil conducting direction constitutes a dominant factor in setting the oil surface at the time of a change in the oil surface. Therefore, it is possible to reduce the total amount of the oil in the transmission, and to enhance aeration toughness at the times of changes in the oil surface which are generated at the times of acceleration and deceleration of the vehicle.

Further according to the invention, the oil suction port cover member is so formed as to cover the left and right sides and the rear side of the oil suction port or the left and right sides and the front side of the oil suction port, as viewed along the forward vehicle running direction. This ensures that the oil flowing in through the oil suction port can be efficiently conducted to the filter member.

Further according to the invention, both an end position of the oil suction port in the direction for conducting the oil by the oil suction port cover member and the total amount of the oil in the transmission are so determined that the end position of the oil suction port is located substantially at the intersection between an oil surface at the time of a maximum vehicle acceleration and an oil surface at the time of a maximum vehicle deceleration.

When the total amount of the oil in the transmission is determined so that the end position of the oil suction port is located substantially at the intersection between the oil surface at the time of a maximum vehicle acceleration and an oil surface at the time of a maximum vehicle deceleration to lower the oil surface as much as possible, it is possible to reduce the total amount of the oil in the transmission, to realize a reduction in weight, and to restrain aeration through a reduction in the oil agitation resistance of gears. Consequently, an improvement in fuel economy can be expected through a reduction of friction.

Further, preferably, the oil suction port cover member is opened in the forward vehicle running direction, a tip position of the oil suction port cover member in the oil conducting direction is located as if advanced more in the forward vehicle running direction than the oil surface at the time of the maximum vehicle deceleration, and the tip position of the oil suction port cover member is so set as to be immersed in the oil at the time of the maximum vehicle deceleration.

Further, preferably, the oil suction port cover member is opened in a direction opposite to the forward vehicle running direction, a tip position of the oil suction port cover member in the oil conducting direction is located as if advanced more in the direction opposite to the forward vehicle running direction than the oil surface at the time of the maximum vehicle acceleration, and the tip position of the oil suction port cover member is so set as to be immersed in the oil at the time of the maximum vehicle acceleration.

According to the configuration as above-mentioned, it is possible to restrain the generation of aeration and to efficiently conduct the oil to the filter member, while minimizing the total amount of the oil required for the transmission.

### Brief Description of Drawings

[FIG. 1]

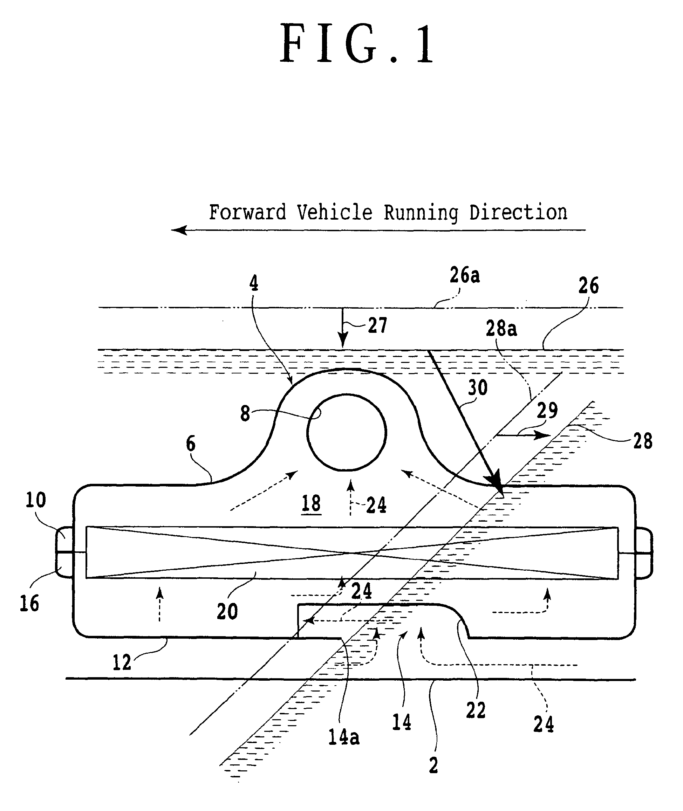

   FIG. 1 is a sectional view showing the relation between an oil strainer and an oil surface in an embodiment of the present invention, at the time of a standstill of the vehicle and at the time of a maximum acceleration.
[FIG. 2]

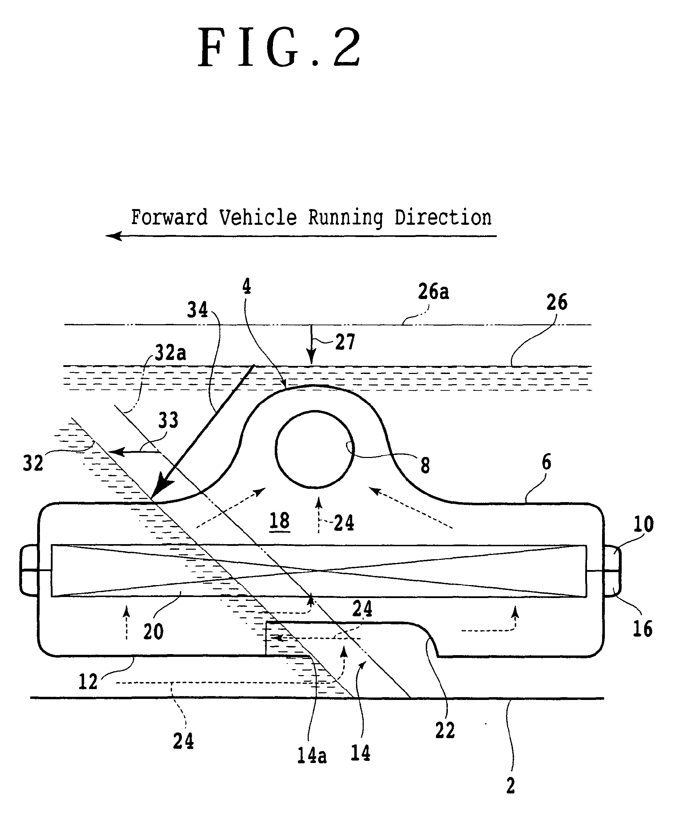

   FIG. 2 is a sectional view showing the relation between the oil strainer and the oil surface in the embodiment of the present invention, at the time of a standstill of the vehicle and at the time of a maximum deceleration.
[FIG. 3]

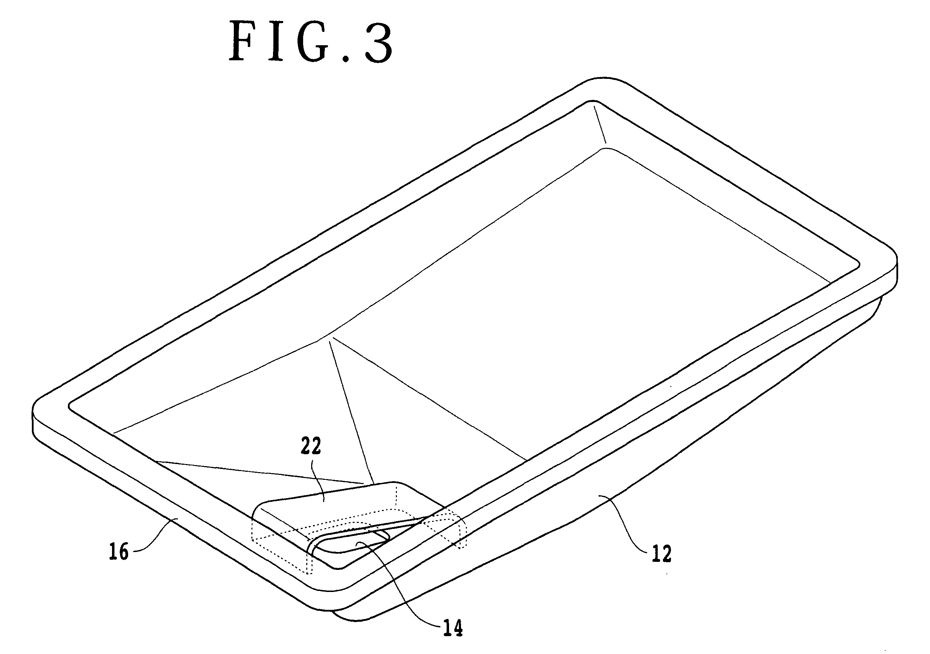

   FIG. 3 is a perspective view of a lower case.
[FIG. 4]

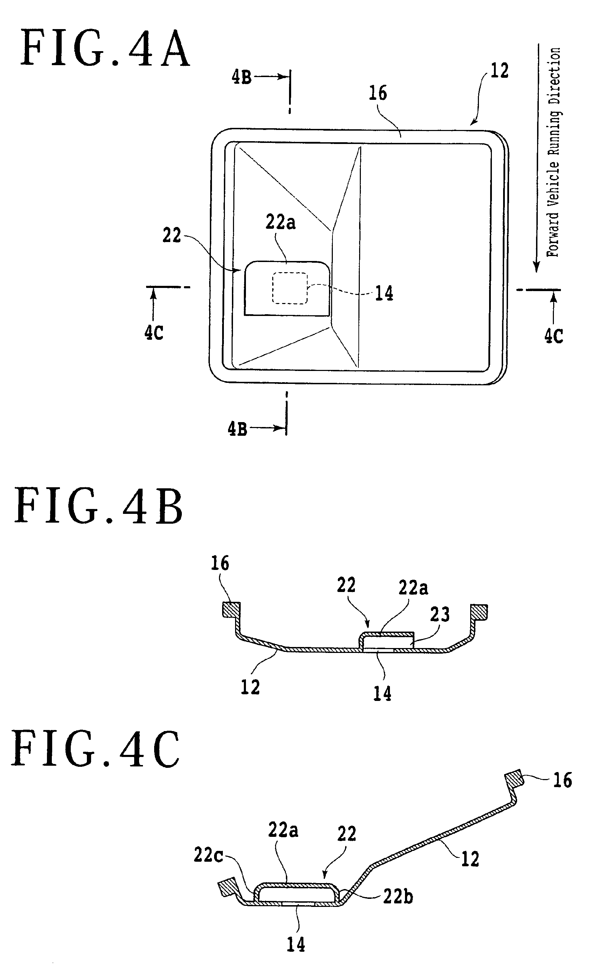

   FIG. 4(A) is a plan view of the lower case, FIG. 4(B) is a sectional view taken along line 4B-4B of FIG. 4(A), and FIG. 4(C) is a sectional view taken along line 4C-4C of FIG. 4(A).
[FIG. 5]

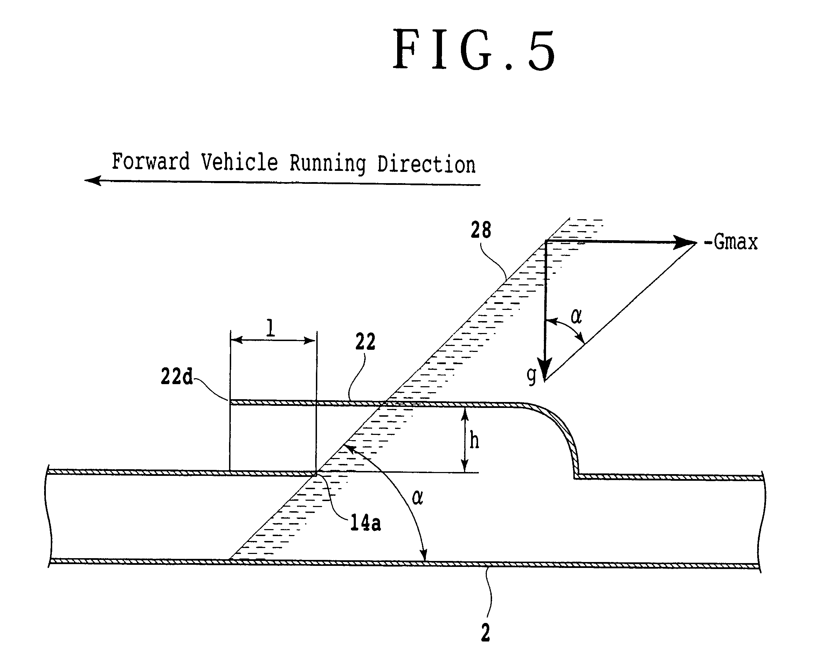

   FIG. 5 shows the relation between the oil surface, an end position of an oil suction port and an oil suction port cover member, at the time of a maximum vehicle acceleration.
[FIG. 6]

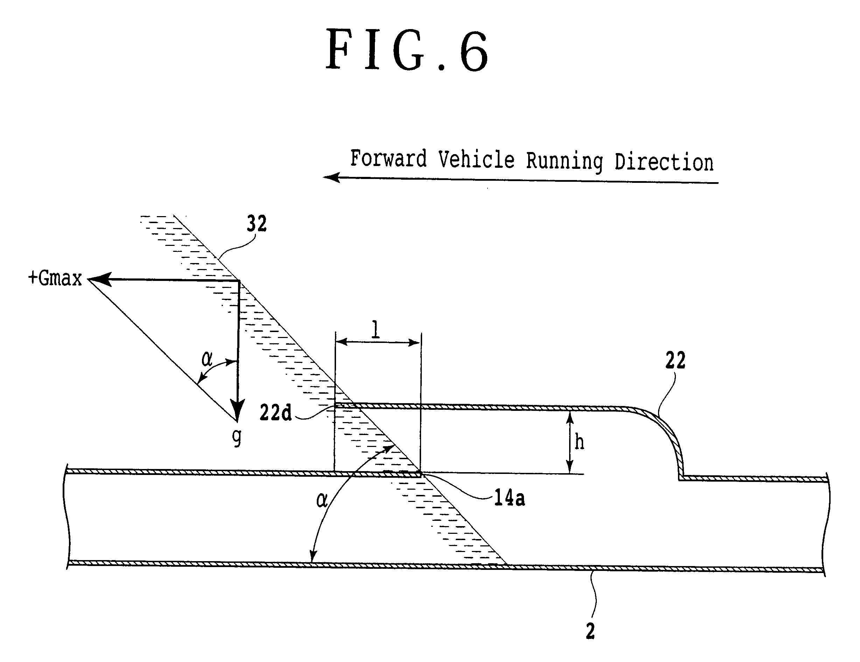

   FIG. 6 shows the relation between the oil surface, the end position of the oil suction port and the oil suction port cover member, at the time of a maximum vehicle deceleration.
[FIG. 7]

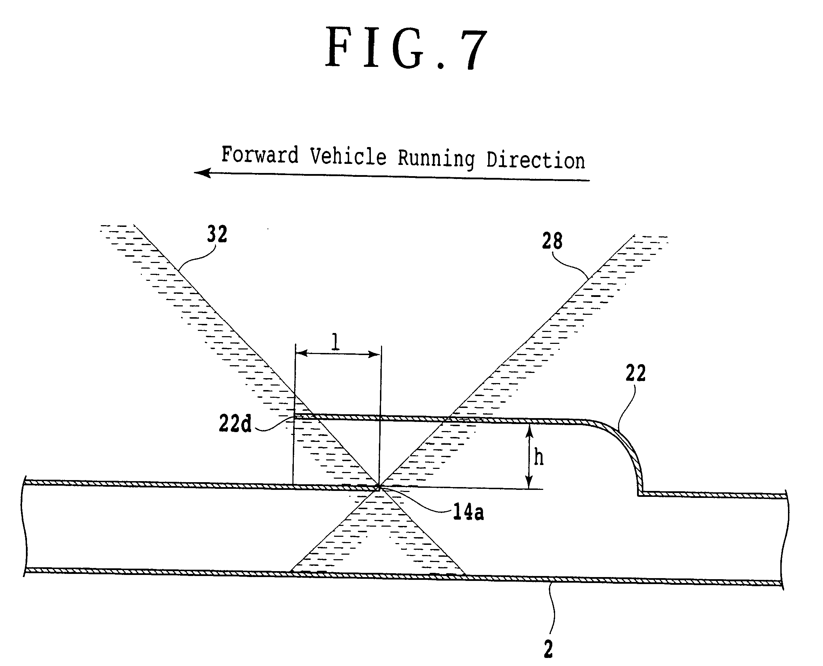

   FIG. 7 shows the relation between the oil surface and the end position of the oil suction port, at the time of the maximum vehicle acceleration and at the time of the maximum vehicle deceleration.
[FIG. 8]

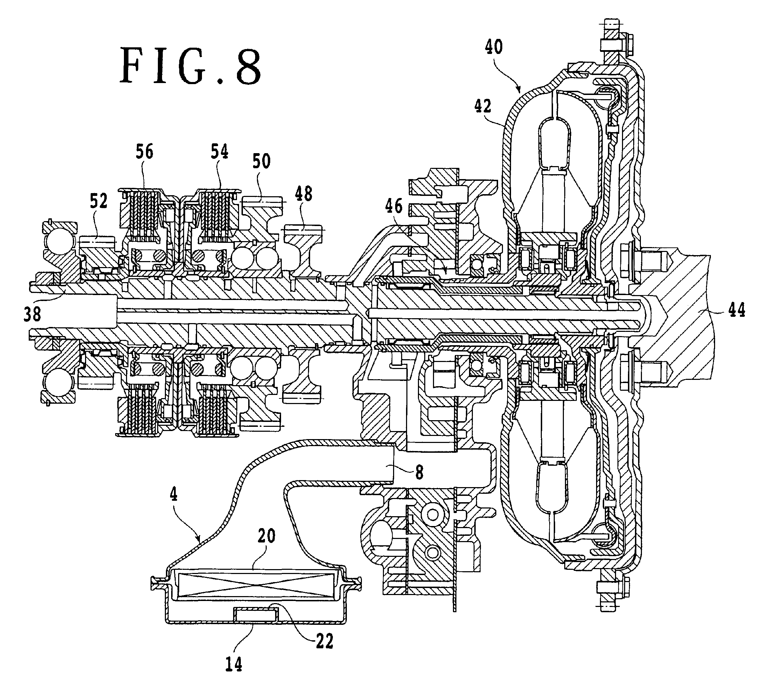

   FIG. 8 is a partial longitudinal sectional view of an automatic transmission equipped with an oil strainer according to the embodiment of the present invention.
[FIG. 9]

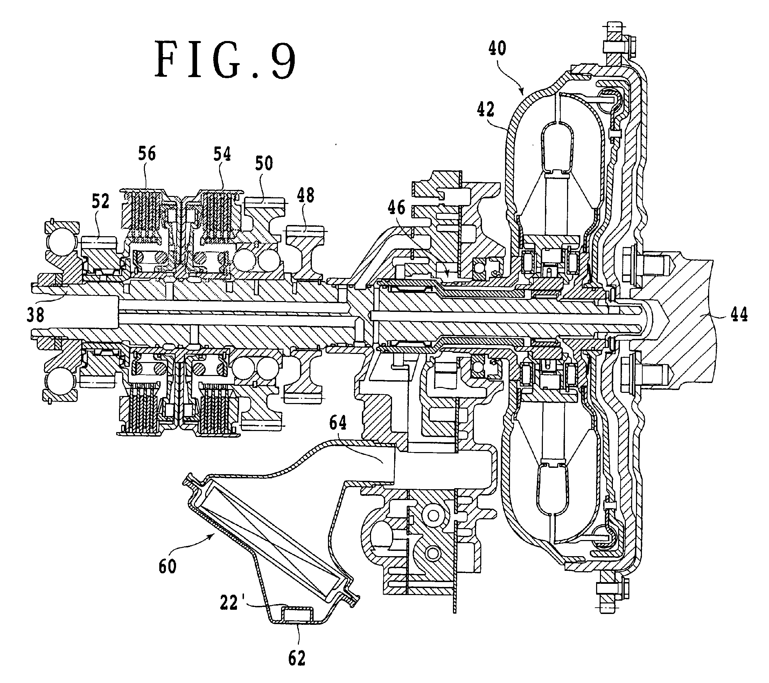

   FIG. 9 is a partial longitudinal sectional view of an automatic transmission equipped with an oil strainer according to another embodiment of the present invention.

### Best Mode for Carrying Out the Invention

Now, an oil strainer for a transmission according to an embodiment of the present invention will be described in detail below, referring to the drawings.

Referring to FIG. 1, a schematic sectional view of the oil strainer according to one embodiment of the present invention is shown, together with changes of an oil surface at the time of standstill of the vehicle and at the time of an acceleration of the vehicle.

Reference numeral 2 denotes a bottom surface of a transmission case, and the oil strainer 4 is disposed in the transmission case. The oil strainer 4 includes an upper case 6 provided with a communication port 8 for communication with an oil pump in a side surface of an upper part thereof, a lower case 12 which is provided with an oil suction port 14 in its lower surface and which is joined to the upper case 6, and a filter member 20 which is disposed in a space 18 formed by joining the upper and lower cases 6 and 12 and which is provided for filtering an oil flowing from the oil suction port 14 to the communication port 8.

Both the upper case 6 and the lower case 12 are formed by resin molding. The upper case 6 is provided with an upper flange 10 along the outer periphery thereof, and the lower case 12 is provided with a lower flange 16 along the outer periphery thereof.

The oil strainer 4 is produced by a method in which both the flanges 10 and 16 are clamped by a jig or jigs of a vibration welder so that the lower surface of the upper flange 10 and the upper surface of the lower flange 16 are in contact with each other, and a vibration is applied to the jig(s) of the vibration welder, whereby both the flanges 10 and 16 are integrally welded to each other.

At the time of thus joining the resin-made upper and lower cases 6 and 12 to each other by vibration welding, the filter member 20 formed by use of a non-woven fabric is clamped between both the cases 6 and 12 being joined. As a result, the filter member 20 is so disposed as to partition the space 18 formed by joining the upper and lower cases 6 and 12 into an upper portion and a lower portion, and the oil flowing from the oil suction port 14 to the communication port 8 is filtered by the filter member 20.

Reference numeral 22 denotes an oil suction port cover member, by which the oil sucked in through the oil suction port 14 is conducted to the filter member 20. Broken line arrow 24 indicates the flow of the oil. The oil suction port cover member 22 is formed as shown in FIGS. 3 and 4.

FIG. 3 shows a perspective view of the lower case 12, and FIG. 4(A) shows a plan view of the lower case 12. FIG. 4(B) is a sectional view taken along line 4B-4B of FIG. 4(A), and FIG. 4(C) is a sectional view taken along line 4C-4C of FIG. 4(A).

As best shown in FIGS. 4(B) and 4(C), the oil suction port cover member 22 is formed by integrally connecting an upper wall 22a and left and right walls 22b, 22c, and a aperture part 23 is opened in the forward vehicle running direction. The oil suction port cover member 22 is integrally molded at the time of molding the lower case 12 from a resin mold.

Referring to FIG. 1 again, reference numeral 14a denotes an end position of the oil suction port 14 in the direction in which the oil is conducted by the oil suction port cover member 22. Reference numeral 26 denotes an oil surface at the time of standstill of the vehicle, whereas reference numeral 28 denotes an oil surface at the time of a maximum acceleration of the vehicle. In addition, reference numeral 26a denotes an oil surface at the time of standstill of the vehicle in the case where an oil strainer according to the related art is used, whereas reference numeral 28a denotes an oil surface at the time of a maximum acceleration of the vehicle in that case.

At the time of a maximum vehicle acceleration, the oil surface is changed from the standstill oil surface 26 as indicated by arrow 30. In addition, according to the oil strainer 4 in the embodiment of the present invention, the total amount of oil in the transmission required can be reduced as compared with that in the related art; therefore, the oil surface at the time of vehicle standstill is lowered as indicated by arrow 27, and the oil surface at the time of a maximum vehicle acceleration is changed as indicated by arrow 29.

FIG. 2 is a sectional view of the oil strainer, showing the change of the oil surface at the time of a maximum vehicle deceleration in comparison with the oil surface in the oil strainer according to the related art. While the oil surface 26 at the time of vehicle standstill is the same as in FIG. 1, the oil surface is changed from the standstill oil surface 26 as indicated by arrow 34 at the time of a maximum vehicle deceleration, whereon the oil surface is as denoted by reference numeral 32.

Reference numeral 32a denotes an oil surface at the time of a maximum deceleration in the case where an oil strainer according to the related art is used. According to this embodiment, the oil surface 32 at the time of the maximum deceleration is changed as indicated by arrow 33 from the oil surface 32a in the related art.

Now, referring to FIGS. 5 to 7, a preferable shape and preferable dimensions of the oil suction port cover member 22 of the oil strainer 4 according to the embodiment of the present invention will be described below. FIG. 5 shows an oil surface at the time of a maximum vehicle acceleration, FIG. 6 shows an oil surface at the time of a maximum vehicle deceleration, and FIG. 7 shows the oil surfaces at the times of the maximum vehicle acceleration and the maximum vehicle deceleration.

As shown in FIGS. 5 and 6, let the maximum vehicle acceleration be Gmax and let the gravitational acceleration be g, then tanα = Gmax/g, and, therefore, the maximum inclination angle α of the oil surface can be expressed as α = tan⁻¹(Gmax/g). The maximum deceleration can be expressed as -Gmax.

The height h of the oil suction port cover member 22 is determined taking into account the aeration toughness based on the positional relationship between the lower case 12 of the oil strainer 4 and the filter member 20, while securing a passage area of not less than the area of the oil suction port 14.

In addition, as shown in FIG. 7, both the end position 14a of the oil suction port 14 in the direction in which the oil is conducted by the oil suction port cover member 22 and the total amount of oil in the transmission are determined so that the end position 14a of the oil suction port 14 is located substantially at the intersection between the oil surface 28 at the time of the maximum vehicle acceleration and the oil surface 32 at the time of the maximum vehicle deceleration.

Thus, in this embodiment, the oil surface can be determined by the end position 14a of the oil suction port 14 in the oil conducting direction. Therefore, the height of the oil surface can be set lower than that in the related art, the total amount of oil in the transmission can be reduced, and aeration toughness at the times of variations in the oil surface which are generated at the times of vehicle acceleration and deceleration can be enhanced.

Besides, the tip position 22d in the oil conducting direction of the oil suction port cover member 22 is located as if advanced more in the forward vehicle running direction than the oil surface 32 at the time of the maximum vehicle deceleration, and the tip position 22d of the oil suction port cover member 22 is so set as to be immersed in the oil at the time of the maximum vehicle deceleration. In other words, the length 1 of the oil suction port cover member 22 shown in FIGS. 5 to 7 is so set that the tip position 22d of the oil suction port cover member 22 is immersed in the oil at the time of the maximum vehicle deceleration.

Referring to FIG. 8, there is shown a partial longitudinal sectional view of an automatic transmission equipped with the oil strainer 4 according to the embodiment of the present invention. The communication port 8 of the oil strainer 4 is connected to an oil pump 46. The oil pump 46 is connected to a crankshaft 44 of an engine (not shown) through a case 42 of a torque converter 40, and is normally driven by the engine.

A gear 48 is non-rotatably fixed to a main shaft 38 of the automatic transmission, and gears 50 and 52 are rotatably mounted on the main shaft 38. With a wet-type multiple-disk clutch 54 engaged, the gear 50 is fixed relative to the main shaft 38. With a wet-type multiple-disk clutch 56 engaged, the gear 52 is fixed relative to the main shaft 38.

FIG. 9 is a partial longitudinal sectional view of an automatic transmission equipped with an oil strainer 60 according to another embodiment which has an oil suction port cover member 22' characteristic of the present invention. The oil strainer 60 is disposed in the state of being inclined to the right or left side with reference to the forward vehicle running direction. An oil suction port 62 of the oil strainer 60 is covered with the oil suction port cover member 22', which is the same as that in the above-described embodiment, and a communication port 64 communicates with an oil pump 46.

According to this embodiment, a lower part of the case of the transmission can be reduced according to the shape of the oil strainer 60, so that a further reduction in the total amount of oil in the transmission can be expected, as compared with the above-described embodiment.

According to the above-described embodiment of the present invention, both the end position 14a of the oil suction port 14 in the direction in which the oil is conducted by the oil suction port cover member 22 and the total amount of oil in the transmission can be so determined that the end position 14a of the oil suction port 14 is located substantially at the intersection between the oil surface 28 at the time of a maximum vehicle acceleration and the oil surface 32 at the time of a maximum vehicle deceleration. This makes it possible to lower, as much as possible, the height of the oil surface, and to reduce the total amount of oil in the transmission.

Further, it is possible to enhance the aeration toughness at the times of changes in the oil surface which are generated at the times of vehicle acceleration and deceleration, to restrain aeration through a reduction in oil weight and a reduction in oil agitation resistance of gears, and to promise an improvement in fuel economy attendant on a reduction of friction.

Incidentally, while an example in which the aperture of the oil suction port cover member 22 is opened toward the front side of the vehicle has been described in the embodiment described above, the aperture of the oil suction port cover member 22 may be set to face toward the rear side of the vehicle.

In this case, the tip position in the oil conducting direction of the oil suction port cover member is located as if advanced more in the direction (toward the rear side of the vehicle) opposite to the forward vehicle running direction than the oil surface at the time of a maximum vehicle acceleration, and the tip position of the oil suction port cover member is so set as to be immersed in the oil at the time of the maximum vehicle acceleration.

## Claims

1. A vehicle comprising a transmission case (2) in which an oil strainer (4) is disposed, the oil strainer (4) comprising:
a resin-made upper case (6) which is provided with a communication port (8) for communication to a pump in a side surface of an upper part thereof and which has an upper flange (10) at an outer periphery thereof,
a resin-made lower case (12) which is provided with an oil suction port (14) in a lower surface thereof and which has a lower flange (16) joined to said upper flange (10) of said upper case (6),
a filter member (20) which is disposed in a space (18) formed by joining said upper and lower cases (6,12) and which filters an oil flowing from said oil suction port (14) to said communication port (8),
an oil suction port cover member (22) which is so formed as to cover at least an inside upper surface of said oil suction port (14) and which forms a passage for conducting said oil to said filter member (20),
wherein said oil suction port cover member (22) is so formed as to cover the left and right sides and the rear side of said oil suction port (14) or the left and right sides and the front side of said oil suction port (14), as viewed along the forward vehicle running direction, and wherein both an end position (14a) of said oil suction port (14) in the direction for conducting said oil by said oil suction port cover member (22) and the total amount of said oil in said transmission are so determined that said end position (14a) of said oil suction port (14) is located substantially at the intersection between an oil surface (28) at the time of a maximum vehicle acceleration and an oil surface (28) at the time of a maximum vehicle deceleration.

2. The vehicle as set forth in claim 1, wherein said oil suction port cover member (22) is opened in the forward vehicle running direction, a tip position (22d) of said oil suction port cover member (22) in said oil conducting direction is located as if advanced more in said forward vehicle running direction than said oil surface (28) at the time of said maximum vehicle deceleration, and
said tip position (22d) of said oil suction port cover member (22) is so set as to be immersed in said oil at the time of said maximum vehicle deceleration.

3. The vehicle as set forth in claim 1, wherein said oil suction port cover member (22) is opened in a direction opposite to said forward vehicle running direction, a tip position (22d) of said oil suction port cover member (22) in said oil conducting direction is located as if advanced more in said direction opposite to said forward vehicle running direction than said oil surface at the time of said maximum vehicle acceleration, and said tip position (22d) of said oil suction port cover member (22) is so set as to be immersed in said oil at the time of said maximum vehicle acceleration.

## Patentansprüche

1. Kraftfahrzeug mit einem Getriebegehäuse (2), in dem ein Ölsieb (4) angeordnet ist, wobei das Ölsieb (4) folgendes besitzt:
ein aus Harz hergestelltes oberes Gehäuse (6), das mit einer Verbindungsöffnung (8) zur Verbindung mit einer Pumpe in einer Seitenfläche eines oberen Teils davon versehen ist, und das an deren äußerem Umfang einen oberen Flansch (10) besitzt,
ein aus Harz hergestelltes unteres Gehäuse (12), das mit einer Ölansaugöffnung (14) in einer unteren Seitenfläche davon versehen ist, und das einen unteren Flansch (16) besitzt, der mit dem oberen Flansch (10) des oberen Gehäuses (6) verbunden ist, und
ein Filterelement (20), das in einem Raum (18) angeordnet ist, der durch Verbinden des oberen und unteren Gehäuses (6, 12) gebildet ist, und das Öl, welches aus der Ölansaugöffnung (14) fließt, in die Verbindungsöffnung (8) filtert,
ein Abdeckelement (22) der Ölansaugöffnung, das derart gebildet ist, dass es mindestens eine obere Innenseite der Ölansaugöffnung (14) abdeckt, und das einen Durchgang bildet, um das Öl zu dem Filterelement (20) zu leiten,
wobei das Abdeckelement (22) der Ölansaugöffnung derart gebildet ist, dass es die linke und rechte Seite und die Rückseite der Ölansaugöffnung (14) oder die linke und rechte Seite und die Vorderseite der Ölansaugöffnung (14), entlang der Vorwärtsfahrtrichtung des Fahrzeuges gesehen, abdeckt, und
wobei eine Endposition (14a) der Ölansaugöffnung (14) in der Richtung zum Leiten des Öls durch das Abdeckelement (22) der Ölansaugöffnung und die Gesamtmenge des Öls in dem Getriebe derart festgelegt sind, dass sich die Endposition (14a) der Ölansaugöffnung (14) im wesentlichen an dem Schnittpunkt zwischen einem Ölspiegel (28) zum Zeitpunkt einer maximalen Fahrzeugbeschleunigung und einem Ölspiegel (28) zum Zeitpunkt einer maximalen Fahrzeugverzögerung befindet.

2. Fahrzeug nach Anspruch 1, wobei das Abdeckelement (22) der Ölansaugöffnung in Vorwärtsfahrtrichtung des Fahrzeuges geöffnet ist, eine Position der Spitze (22d) des Abdeckelementes (22) der Ölansaugöffnung in der Öl leitenden Richtung derart angeordnet ist, als ob sie zum Zeitpunkt der maximalen Fahrzeugverzögerung in der Vorwärtsfahrtrichtung des Fahrzeuges weiter vorne liegt als der Ölspiegel (28), und
die Position der Spitze (22d) des Abdeckelementes (22) der Ölansaugöffnung so angeordnet ist, dass sie zu dem Zeitpunkt der maximalen Fahrzeugverzögerung in das Öl eingetaucht ist.

3. Fahrzeug nach Anspruch 1, wobei das Abdeckelement (22) der Ölansaugöffnung in einer Richtung entgegengesetzt zur Vorwärtsfahrtrichtung des Fahrzeuges geöffnet ist, eine Position der Spitze (22d) des Abdeckelementes (22) der Ölansaugöffnung in der Öl leitenden Richtung derart angeordnet ist, als ob sie zum Zeitpunkt der maximalen Fahrzeugbeschleunigung in der Richtung entgegengesetzt zur Vorwärtsfahrtrichtung des Fahrzeuges weiter vorne liegt als der Ölspiegel, und die Position der Spitze (22d) des Abdeckelementes (22) der Ölansaugöffnung so angeordnet ist, dass sie zu dem Zeitpunkt der maximalen Fahrzeugbeschleunigung in das Öl eingetaucht ist.

## Revendications

1. Véhicule comprenant un boîtier de transmission (2) dans lequel une crépine (4) est disposée, la crépine (4) comprenant :
un boîtier supérieur constitué de résine (6) qui est doté d'un orifice de communication (8) pour communiquer avec une pompe dans une surface latérale d'une partie supérieure de ce dernier et qui a une bride supérieure (10) au niveau d'une périphérie externe de ce dernier,
un boîtier inférieur constitué de résine (12) qui est doté d'un orifice d'aspiration d'huile (14) dans une surface inférieure de ce dernier et qui a une bride inférieure (16) reliée à ladite bride supérieure (10) dudit boîtier supérieur (6), et
un organe de filtre (20) qui est disposé dans un espace (18) formé en reliant lesdits boîtiers supérieur et inférieur (6, 12) et qui filtre une huile s'écoulant dudit orifice d'aspiration d'huile (14) vers ledit orifice de communication (8),
un organe de capot d'orifice d'aspiration d'huile (22) qui est formé de façon à couvrir au moins une surface supérieure interne dudit orifice d'aspiration d'huile (14) et qui forme un passage pour conduire ladite huile vers ledit organe de filtre (20),
dans lequel ledit organe de capot d'orifice d'aspiration d'huile (22) est formé de façon à couvrir les côtés gauche et droit et le côté arrière dudit orifice d'aspiration d'huile (14) ou les côtés gauche et droit et le côté avant dudit orifice d'aspiration d'huile (14), tel que vu le long de la direction de déplacement vers l'avant du véhicule, et dans lequel à la fois une position finale (14a) dudit orifice d'aspiration d'huile (14) dans la direction permettant de guider ladite huile par ledit organe de capot d'orifice d'aspiration d'huile (22) et la quantité totale de ladite huile dans ladite transmission sont déterminées de sorte que ladite position finale (14a) dudit orifice d'aspiration d'huile (14) est situées sensiblement au niveau de l'intersection entre une surface d'huile (28) au moment d'une accélération maximale du véhicule et une surface d'huile (28) au moment d'une décélération maximale du véhicule.

2. Véhicule selon la revendication 1, dans lequel ledit organe de capot d'orifice d'aspiration d'huile (22) est ouvert dans la direction de déplacement vers l'avant du véhicule, une position d'extrémité (22d) dudit organe de capot d'orifice d'aspiration d'huile (22) dans ladite direction de guidage d'huile est située comme si elle était plus avancée dans ladite direction de déplacement vers l'avant du véhicule que ladite surface d'huile (28) au moment de ladite décélération maximale du véhicule, et
ladite position d'extrémité (22d) dudit organe de capot d'orifice d'aspiration d'huile (22) est réglée de façon à être immergée dans ladite huile au moment de ladite décélération maximale du véhicule.

3. Véhicule selon la revendication 1, dans lequel ledit organe de capot d'orifice d'aspiration d'huile (22) est ouvert dans une direction opposée à ladite direction de déplacement vers l'avant du véhicule, une position d'extrémité (22d) dudit organe de capot d'orifice d'aspiration d'huile (22) dans ladite direction de guidage d'huile est située comme si elle était plus avancée dans ladite direction de déplacement vers l'avant du véhicule que ladite surface d'huile au moment de ladite accélération maximale du véhicule, et ladite position d'extrémité (22d) dudit organe de capot d'orifice d'aspiration d'huile (22) est établie de façon à être immergée dans ladite huile au moment de ladite accélération maximale du véhicule.
